# EUROPÄISCHE PATENTANMELDUNG

(11) **EP 0 905 019 A2**
(43) Veröffentlichungstag der Anmeldung: **31.03.1999**
(21) Anmeldenummer: 98117665.4
(22) Anmeldetag: 17.09.1998
(51) Int. Cl.: B64C 3/48, B64C 27/615

(54) **Tragende Struktur**

(30) Priorität: 25.09.1997 DE 19742314
(71) Anmelder: Daimler-Benz Aktiengesellschaft, 70567 Stuttgart (DE); Institut für Verbundwerkstoffe GmbH, 67663 Kaiserslautern (DE)
(72) Erfinder: Martin, Willi, Dr., 85293 Reichertshausen (DE); Siegling, Hans-Friedrich, 85658 Egmating (DE); Kuhn, Marcel, 67655 Kaiserslautern (DE); Himmel, Norbert, Dr., 66851 Linden (DE)
(74) Vertreter: Baum, Wolfgang

(57) **Zusammenfassung**

Eine tragende Struktur, die wahlweise starr oder beweglich einstellbar ist, weist ein thermoplastisches Material (7) auf, das eine Erweichungstemperatur über der Betriebstemperatur der tragenden Struktur besitzt. Damit ist die tragende Struktur bei Betriebstemperatur starr ausgebildet. Durch eine Heizeinrichtung, durch die das thermoplastische Material auf Erweichungstemperatur erwärmbar ist, ist die tragende Struktur beweglich einstellbar.

## Beschreibung

Die Erfindung bezieht sich auf eine tragende Struktur, die wahlweise starr oder beweglich einstellbar ist.

Nach dem Stand der Technik sind Bauteil-Komponenten, die wahlweise starr oder beweglich miteinander verbunden sind, durch ein Gelenk verbunden, das mit einer Verriegelungsvorrichtung arretiert oder gelöst werden kann, welche z.B. durch eine Steuereinheit betätigbar ist. Die bekannten tragenden Strukturen, die wahlweise starr oder beweglich einstellbar sind, erfordern damit aufwendige Gelenke und eine Verriegelungsvorrichtung, also eine Vielzahl von Komponenten. Dies ist insbesondere im Leichtbau von Nachteil, dessen oberstes Ziel naturgemäß die Gewichtsminimierung verbunden mit einer Reduzierung der Komponentenanzahl ist.

Aufgabe der Erfindung ist es, eine einfach aufgebaute leichte tragende Struktur bereitzustellen, die wahlweise starr oder beweglich einstellbar ist.

Dies wird erfindungsgemäß mit der im Anspruch 1 angegebenen tragenden Struktur erreicht. In den Unteransprüchen sind vorteilhafte Ausgestaltungen der Erfindung wiedergegeben.

Nach der Erfindung besteht die tragende Struktur zumindest teilweise aus einem thermoplastischen Material, das eine Erweichungstemperatur über der Betriebstemperatur der tragenden Struktur aufweist, so dass es im Betriebszustand der tragenden Struktur starr ist. Das thermoplastische Material ist mit einer Heizvorrichtung auf eine Temperatur oberhalb seiner Erweichungstemperatur erwärmbar, wodurch der starre Zustand der tragenden Struktur beseitigt, d.h., die tragende Struktur beweglich eingestellt werden kann. Nach dem Abkühlen auf die Betriebstemperatur nimmt sie dann wieder den starren Zustand ein. Erfindungsgemäß wird damit eine tragende Struktur mit integrierter Löse- und Arretierungsfunktion bereitgestellt.

Erfindungsgemäß wird damit vom bisherigen Konzept, das mehrteilige Bauweisen von wahlweise starr oder beweglich einstellbaren tragenden Strukturen vorsieht, abgegangen. Die erfindungsgemäße tragende Struktur zeichnet sich demgegenüber durch eine Funktions- oder Teileintegration aus, die durch die schaltbare Steifigkeit des thermoplastischen Materials ermöglicht wird. Darüberhinaus benötigt die erfindungsgemäße tragende Struktur für den Gestaltungsänderungsvorgang nur geringe Stell- oder Auslenkungskräfte.

Das für die erfindungsgemäße tragene Struktur verwendete thermoplastische Material ist vorzugsweise ein thermoplastischer Kunststoff. Dabei werden höher schmelzende thermoplastische Kunststoffe, wie z.B. Polyetheretherketon (PEEK) oder Polyethersulfon (PES), im allgemeinen bevorzugt, da sie eine relativ hohe Erweichungstemperatur aufweisen und damit den Betrieb der tragenden Struktur bei einer entsprechend hohen Temperatur ermöglichen.

Die erfindungsgemäße tragende Struktur kann in unterschiedlicher Weise aufgebaut sein. So kann sie z.B. ganz aus einem thermoplastischen Material bestehen, also ein aus thermoplastischem Material bestehendes Bauteil sein.

Die erfindungsgemäße tragende Struktur kann aber auch beispielsweise aus zwei oder mehreren Komponenten bestehen, die durch das thermoplastische Material verbunden sind. Die Komponenten müssen dann eine Erweichungstemperatur aufweisen, die oberhalb der Erweichungstemperatur des thermoplastischen Materials liegt. Dazu können die Komponenten aus Metall, insbesondere einem Leichtmetall oder aus einem Kunststoff, insbesondere faserverstärkten Kunststoff bestehen, der eine höhere Erweichungstemperatur besitzt als das thermoplastische Material, das die Komponenten oder Bauteile verbindet.

Falls die tragende Struktur aus Komponenten besteht, die durch das thermoplastische Material verbunden sind, liegt damit eine starre Verbindung der Bauteile bei Betriebstemperatur, also unterhalb der Erweichungstemperatur des thermoplastischen Materials vor, wobei die starre Verbindung der Bauteile durch Erwärmung des thermoplastischen Materials auf Erweichungsemperatur mit der Heizeinrichtung gelöst werden kann.

Da das thermoplastische Material nach seiner Erweichung in beliebiger Weise verformbar ist, kann die Beweglichkeit der tragenden Struktur sehr unterschiedlich ausgebildet sein.

Wenn die tragende Struktur beispielsweise aus durch das thermoplastische Material verbundenen Komponenten besteht, kann das thermoplastische Material nach seiner Erweichung, beispielsweise einer Schubbelastung ausgesetzt werden, um die Komponenten gegenübereinander zu verschieben, oder einer Biegebelastung, um die Komponenten gegenübereinander zu verbiegen, oder einer Torsionsbelastung, um die Bauteile gegenseitig zu verdrehen. Das erweichte thermoplastische Material bildet damit also z.B. ein Schubgelenk, Biegegelenk oder ein Torsionsgelenk.

Insbesondere im Leichtbau gibt es damit eine Vielzahl von Anwendungen für die erfindungsgemäße tragende Struktur, beispielsweise dort, wo ein im Betrieb biege- oder torsionssteifes Bauteil veränderten Betriebsbedingungen in seiner äußeren Geometrie adaptiv anzupassen ist, ohne dafür aufwendige Gelenke oder Mechanismen vorsehen zu müssen.

Durch Erweichung des thermoplastischen Materials auf Erweichungstemperatur kann damit die Steifigkeit der tragenden Struktur bei Bedarf abgesenkt werden, um mit relativ geringem Kraftaufwand die Struktur zu verformen oder die Bauteilkomponenten gegeneinander zu verschieben, bevor nach erneutem Anstieg der Steifigkeit durch Abkühlung des thermoplastischen Materials auf eine Temperatur unterhalb seiner Erweichungstemperatur die verformte Geometrie ohne weitere permanente Krafteinwirkung beibehalten bzw. die gegeneinander verschobenen Bauteile wiederum miteinander arretiert werden können. Dieser Vorgang ist praktisch beliebig oft reversibel durchführbar.

Das thermoplastische Material kann eine beliebige Form aufweisen. Das heißt, es kann beispielsweise eine Platte, ein Klotz, eine Schicht, eine Stange mit beispielsweise rundem oder eckigem Querschnitt oder ein anderer beliebig geformter Körper sein.

Nach einer Ausführungsform der Erfindung weist die tragende Struktur einen Sandwich-Aufbau auf. Das heißt, das thermoplastische Material bildet eine Schicht, die zwischen zwei Schichten aus einem bei Erweichungstemperatur des thermoplastischen Materials festen Material angeordnet ist. Dieses bei Erweichungstemperatur des thermoplastischen Materials feste Material kann z.B. ein Metall, insbesondere ein Leichtmetall oder ein Kunststoff, insbesondere ein faserverstärkter Kunststoff mit entsprechend hoher Erweichungs- bzw. Zersetzungstemperatur sein. Die äußeren oder Deckschichten können plattenförmig aber auch in anderer Weise ausgebildet sein, beispielsweise aus konzentrisch angeordneten Rohren bestehen, zwischen denen sich das thermoplastische Material befindet.

Falls eine solche Sandwich-Struktur einer Biegebelastung ausgesetzt werden soll, müssen die äußeren Schichten aus einem entsprechend biegsamen Material bestehen. Die äußeren Schichten sind im allgemeinen stoffdicht, insbesondere wenn das thermoplastische Material bis zu einem plastischen Zustand erweicht wird; sie können jedoch auch aus einem porösen Material, beispielsweise Streckmetall oder dgl. bestehen.

Die Heizvorrichtung zur Erwärmung des thermoplastischen Materials der erfindungsgemäßen tragenden Struktur kann eine elektrische Widerstandsheizung sein, die in das thermoplastische Material eingelagerte Heizdrähte aufweist. Die Heizdrähte sind dabei entsprechend der Belastung ausgebildet, der sie ausgesetzt sind, wenn die tragende Struktur nach Erweichen des thermoplastischen Materials bewegt wird. Die Heizdrähte können daher beispielsweise spiralförmig, zickzack- oder schlangenförmig in dem thermoplastischen Material angeordnet sein.

Statt einer elektrischen Widerstandsheizung kann die Heizvorrichtung auch durch eine Kontakt-, Konvektions-, Hochfrequenz- oder Strahlungsheizung gebildet sein. Bei Verwendung einer Hochfrequenzheizung mit einer um das thermoplastische Material angeordneten Hochfrequenzspule kann das thermoplastische Material beispielsweise auch aus einem Polymeren mit entsprechenden dielektrischen Eigenschaften bestehen und/oder in das thermoplastische Material können Metall- oder andere elektrisch leitende Teilchen eingelagert sein.

Um die tragende Struktur von dem starren in den beweglichen Zustand überzuführen, muss nicht das gesamte thermoplastische Material auf Erweichungstemperatur erwärmt werden. Vielmehr kann auch nur der innere Bereich des thermoplastischen Materials auf Erweichungstemperatur erwärmt werden, oder eine äußere Randzone des thermoplastischen Materials oder beide äußeren Randzonen. Da bei der Erwärmung des inneren Bereichs der Wärmeverlust geringer ist, wird jedoch im allgemeinen die Erwärmung des inneren Bereichs vorgezogen. Die Strahlungs-, Kontakt- oder Konvektionsheizung wird z.B. verwendet, wenn die Struktur von außen erwärmt werden muss.

Damit wird das thermoplastische Material von außen, also von den Randzonen her auf Erweichungstemperatur erwärmt.

Wenn nur die Randschichten bzw. das Innere des thermoplastischen Materials erwärmt werden, also das Innere bzw. die Randschichten im festen Aggregatzustand verbleiben, sorgen diese nach ihrer Verformung oder gegenseitigen Verschiebung durch das Aufbringen einer Stellkraft für die Formgebung der sich wieder verfestigenden Materialanteile und für die für eine spätere Rückformung in den Aggregatzustand erforderliche Rückstellkraft.

Eine alternative Möglichkeit zum Aufbringen einer Verformung bzw. zur Einleitung der dafür notwendigen Kraft besteht darin, das thermoplastische Material mit einem Element aus einer Formgedächtnislegierung zu versehen, welches bei Erwärmung des thermoplastischen Materials auf Erweichungstemperatur die tragende Struktur verformt. Das oder die Elemente aus einer Formgedächtnislegierung, mit denen das thermoplastische Material versehen ist, können in beliebiger Weise ausgebildet sein, beispielsweise als Streifen, Platten, Drähte oder Stangen. Die Elemente können dabei in dem thermoplastischen Material vorgesehen sein, oder an dessen Außenseite.

Beispielsweise kann eine Sandwich-Struktur vorgesehen sein, bei der die äußeren Schichten aus einer Formgedächtnislegierung bestehen, während das thermoplastische Material die Zwischenschicht bildet.

Formgedächtnislegierungen werden durch Einbringen thermischer oder elektrischer Energie angesteuert, welche diese aufheizt. Nach ihrem Übergang von der martensitischen Phase in die austenitische Phase bei der sog. Aₛ-Temperatur "erinnern" sie sich wieder an ihre ursprüngliche unverformte Form und können so als Stellglied fungieren. Bei technisch anwendbaren Formedächtnislegierungen liegt die maximale Aₛ-Temperatur zwischen 120°C (Ni-Ti) und 170°C (Cu-Al-Ni).

Bei der erwähnten Sandwich-Struktur kann beispielsweise bei optimierter Abstimmung von Material und Geometrie der Formgedächtnislegierungsdeckschichten und des thermoplastischen Materialkerns eine Steuerung von Verformung und Struktursteifigkeitsrückgewinn oder Verriegelung der Struktur allein durch die Konvektionswärme des thermoplastischen Materials der inneren Schichten erhalten werden.

Dazu wird beispielsweise ein Thermoplast mit einer Schmelztemperatur > 200°C verwendet. Voraussetzung ist eine bereits ausreichende Schubsteifigkeit des Kerns bei Unterschreiten der Aₛ-Temperatur, um die Zurücknahme des Formänderungseffekts der Formgedächtnislegierung zu verhindern. Das bedeutet, das Material der inneren Schicht darf erst oberhalb der Aₛ-Temperatur der Formgedächtnislegierung beginnen zu erweichen und muss beim Abkühlen bereits vor Erreichen der M_{f}-Temperatur der Formgedächtnislegierung erstarrt sein. Dies kann durch Wahl einer Formgedächtnislegierung mit entsprechend breiter Hysterese erreicht werden.

Die M_{f}-Temperatur ist die Temperatur, bei der eine 100%ige Martensitumwandlung erreicht ist.

Durch die Erfindung wird also eine tragende Struktur im Leichtbau mit integrierter Gelenkfunktion bereitgestellt, wobei das Gelenk arretiert und gelöst werden kann, je nachdem ob das thermoplastische Material durch Einschalten der Heizeinrichtung auf Erweichungstemperatur erwärmt oder bei ausgeschalteter Heizeinrichtung abgekühlt ist. Die erfindungsgemäße tragende Struktur ist dabei insbesondere im Kraftfahrzeug- und Flugzeugbau einsetzbar.

Nachstehend sind Ausführungsformen der erfindungsgemäßen tragenden Struktur anhand der Zeichnung beispielhaft näher erläutert. Darin zeigen jeweils stark schematisch vereinfacht
- Fig. 1: einen Schnitt durch die Landeklappe eines Flugzeugs;
- Fig. 2a und 2b: einen Schnitt durch den Bereich A der Außenhaut der Landeklappe nach Fig. 1 in vergrößerter Wiedergabe in etwa waagrechtem bzw. nach oben gebogenem Zustand.

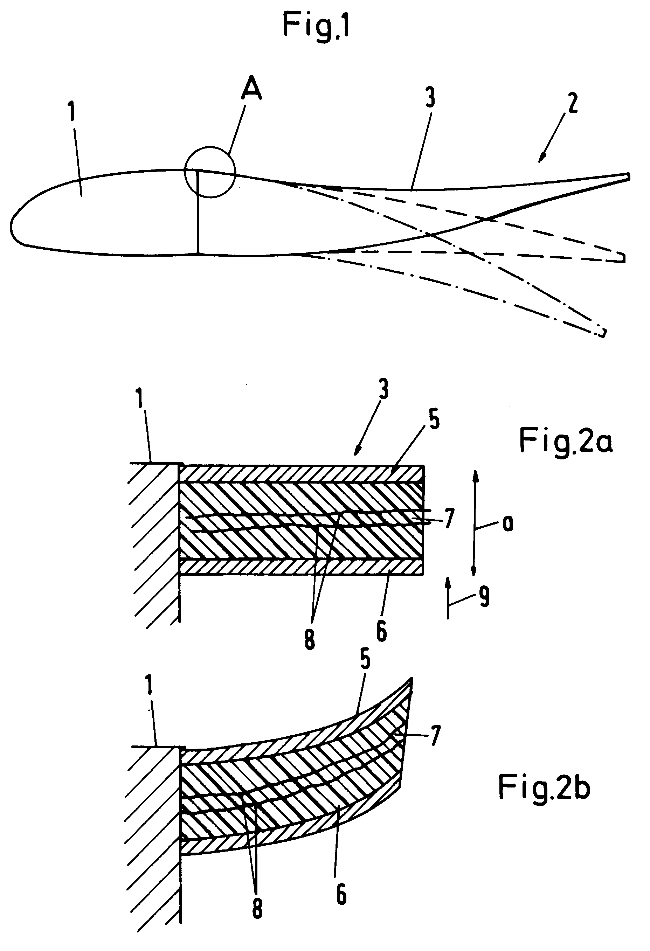

Gemäß Fig. 1 weist die Landeklappe eines Flugzeugs einen vorderen Abschnitt 1 und einen Hinterkanten-Abschnitt 2 auf, die sich an den vorderen Abschnitt 1 stromlinienförmig anschließt. Der Abschnitt 2 weist eine Außenhaut 3 auf, die an dem Vorderteil 1 befestigt ist. Gemäß Fig. 1 ist der Hinterkanten-Abschnitt 2 zwischen einer oberen, mit durchgehenden Linien gezeichneten Position und einer unteren, mit strichpunktierten Linien gezeichneten Position über eine mittlere etwa waagrechte, gestrichelt gezeichnete Position mit einem nicht dargestellten Aktuator beliebig einstellbar.

Gemäß Fig. 2a und 2b weist dazu die Außenhaut 3 eine Sandwich-Struktur auf, und zwar besteht sie aus zwei äußeren Schichten 5, 6 z.B. aus Metall oder Kunststoff und einer Innenschicht 7 aus einem thermoplastischen Material.

Das thermoplastische Material weist eine Erweichungstemperatur auf, die wesentlich oberhalb der Temperatur der Landeklappe im Flugbetrieb liegt. Die äußeren Schichten 5, 6 sind stoffdicht und besitzen eine für die Belastung der Landeklappe ausreichende Biege- und Torsionsfestigkeit. Durch ihren Abstand a voneinander setzen sie eine den auftretenden Belastungen genügende Biegesteifigkeit entgegen. Das thermoplastische Material der Innenschicht 7 gewährleistet im festen Aggregatzustand eine ausreichende Steifigkeit des Abschnitts 2. Es kann dazu mit Verstärkungsfasern versehen sein.

In der Innenschicht 7 verlaufen die Heizdrähte 8 einer elektrischen Widerstandsheizung. Damit kann das thermoplastische Material 7 in der Außenhaut 3 auf Erweichungstemperatur erwärmt werden, so dass die Außenhaut 3 (und damit der Abschnitt 2) durch Aufbringen einer Stellkraft gemäß dem Pfeil 9 in Fig. 2a mit dem nicht dargestellten Aktuator in die Position gemäß Fig. 2b gebogen werden.

Nach Abschalten der Heizvorrichtung 8 erstarrt das thermoplastische Material der Innenschicht 7, so dass die Außenhaut 3 ihre neue Geometrie beibehält, Voraussetzung ist die Aufrechterhaltung der Stellkraft gemäß em Pfeil 9 bis zum Abschluss des Übergangs von der erweichten in die feste Phase des thermoplastischen Materials. Danach sorgt die wieder voll vorhandene Steifigkeit der Innenschicht 7 für die Fixierung der verformten Geometrie und die Bereitstellung der strukturellen Steifigkeit der Hinterkante 2. Die Geschwindigkeit der Steifigkeitszunahme des thermoplastischen Materials der Innenschicht 7 kann durch eine zusätzliche Kühlung während der Phase der Erstarrung des thermoplastischen Materials beschleunigt werden.

## Patentansprüche

1. Tragende Struktur, die wahlweise starr oder beweglich einstellbar ist, dadurch gekennzeichnet, dass sie zumindest teilweise durch ein thermoplastisches Material (7) gebildet wird, das zur starren Einstellung der tragenden Struktur eine Erweichungstemperatur über der Betriebstemperatur der tragenden Struktur aufweist, und eine Heizeinrichtung vorgesehen ist, durch die das thermoplastische Material (7) zur beweglichen Einstellung der tragenden Struktur auf Erweichungstemperatur erwärmbar ist.

2. Tragende Struktur nach Anspruch 1, dadurch gekennzeichnet, dass das thermoplastische Material (7) im inneren Bereich oder an wenigstens einer seiner äußeren Zonen mit der Heizeinrichtung auf die Erweichungstemperatur des thermoplastischen Materials (7) erwärmbar ist.

3. Tragende Struktur nach Anspruch 1 oder 2, dadurch gekennzeichnet, dass das thermoplastische Material (7) zwischen zwei Schichten (5, 6) aus einem bei der Erweichungstemperatur des thermoplastischen Materials festen Material angeordnet ist.

4. Tragende Struktur nach einem der vorstehenden Ansprüche, dadurch gekennzeichnet, dass das thermoplastische Material (7) mit Verstärkungsfasern versehen ist.

5. Tragende Struktur nach einem der vorstehenden Ansprüche, dadurch gekennzeichnet, dass die Heizeinrichtung eine Widerstandsheizung mit in dem thermoplastische Material (7) angeordneten Heizdrähten (8) ist.

6. Tragende Struktur nach einem der vorstehenden Ansprüche, dadurch gekennzeichnet, dass das thermoplastische Material (7) mit einem Element aus einer Formgedächtnislegierung versehen ist, welches bei Erwärmung des thermoplastischen Materials (7) auf dessen Erweichungstemperatur die tragende Struktur verformt.

7. Tragende Struktur nach Anspruch 6, dadurch gekennzeichnet, dass die Erweichungstemperatur des thermoplastischen Materials (7) oberhalb der Aₛ-Temperatur der Formgedächtnislegierung und die Erstarrungstemperatur des thermoplastischen Materials oberhalb der M_{f}-Temperatur der Formgedächtnislegierung liegt.
